Europäisches Patentamt

European Patent Office

Office européen des brevets

(19)

(11) Numéro de publication: **0 198 734**
**B1**

(12) ## FASCICULE DE BREVET EUROPÉEN

(45) Date de publication du fascicule du brevet:
**10.06.88**

(21) Numéro de dépôt: **86400508.7**

(22) Date de dépôt: **11.03.86**

(51) Int. Cl.⁴: **F 16 F 9/38,** F 16 J 3/04,
F 16 J 15/52

(54) **Soufflet de protection pour tige d'amortisseur, notamment pour véhicule automobile.**

(30) Priorité: **15.03.85 FR 8503836**

(43) Date de publication de la demande:
**22.10.86 Bulletin 86/43**

(45) Mention de la délivrance du brevet:
**10.06.88 Bulletin 88/32**

(84) Etats contractants désignés:
**AT BE CH DE GB IT LI NL SE**

(56) Documents cité:
**EP-A-0 003 869**
**DE-A-2 845 243**
**DE-U-7 030 176**
**FR-A-1 405 635**
**FR-A-2 246 784**
**US-A-2 749 757**

(73) Titulaire: **COMPAGNIE DES PRODUITS INDUSTRIELS DE L'OUEST (C.P.I.O.), Boîte Postale 1226 Zone Industrielle de Nantes Carquefou, F-44023 Nantes Cédex (FR)**

(72) Inventeur: **Baudrit, Patrick, 1, avenue du Cheneau "La Grammone", F-44120 Vertou (FR)**

(74) Mandataire: **Réal, Jacques, Régie Nationale des Usines Renault SCE 0804, F-92109 Boulogne Billancourt Cedex (FR)**

## Description

La présente invention se rapporte à un soufflet de protection pour tige d'amortisseur, notamment pour véhicule automobile.

On connaît l'utilité d'un tel soufflet qui protège la tige de l'amortisseur, lorsqu'en position de rebond elle se trouve pour sa plus grande longueur hors du corps de l'amortisseur, et donc exposée aux projections diverses et notamment aux attaques chimiques.

Ce soufflet, est généralement constitué par une pièce de révolution creuse essentiellement composée d'une partie centrale comportant des spires absorbant les déplacements longitudinaux, et de deux embouts accrochés aux organes en déplacement relatif, à savoir le corps et la tige de l'amortisseur; le brevet français FR-A-2.246.784 illustre une telle disposition.

Le soufflet est réalisé en caoutchouc ou en matériau thermoplastique, ce dernier présentant toutefois l'avantage d'être utilisé en épaisseur plus faible, donnant ainsi lieu à un encombrement plus restreint à l'état comprimé; de plus, il possède des caractéristiques mécaniques et de tenue aux hydraucarbures, à la déchirure et à l'abrasion supérieures à celles du caoutchouc; il peut être fabriqué par extrusion soufflage ou injection soufflage.

On connaît également, du modèle d'utilité allemand DE-U 703 0176, un soufflet constitué de deux éléments plissés disposés dans le prolongement l'un de l'autre, séparés par une entretoise sensiblement perpendiculaire à l'axe de l'amortisseur, cette disposition permettant un débattement important de la tige de ce dernier.

Toutefois, on voit que l'encombrement minimum de ce soufflet est égal à la somme des encombrements des éléments plissés comprimés, dont le matériau est, dans cet état, le siège de fortes contraintes en endurance.

L'objet de la présente invention est un soufflet dont la partie fonctionnelle centrale permet une élongation de grande amplitude lorsque l'amortisseur est en extension, mais qui peut se comprimer aisément sous une faible hauteur lorsque l'amortisseur est en position d'écrasement maximum.

Le soufflet selon l'invention est constitué d'au moins deux éléments plissés concentriques, reliés entre eux par une entretoise intermédiaire, caractérisé par le fait que l'entretoise est une membrane de révolution apte à être facilement retournée de sa forme de production à sa position fonctionnelle dans laquelle elle se situe sensiblement au milieu de l'espace disponible entre les éléments plissés qui, en situation d'extension dit soufflet sont en relation axiale, ladite entretoise étant solidarisée par l'une de ses extrémités à la spire la plus proche de l'élément de grand diamètre par l'intermédiaire d'une zone mince et normale à l'axe du soufflet, avec laquelle elle forme une courbe en creux vers l'intérieur poursuivie par une inflexion inversée qui la relie à un corps central et tubulaire de l'entretoise et dont l'autre extrémité est réunie par une courbe à la spire extrême de l'élément de petit diamètre dont l'extrémité libre est solidarisée à la tige, de telle façon que lorsque les éléments sont repliés à spires jointives, la hauteur totale du soufflet correspond sensiblement à celle de l'entretoise.

L'invention sera décrite au regard des figures 1 à 6 ci-jointes, qui se rapportent respectivement:

- La figure 1, à une coupe longitudinale de la tige d'amortisseur revêtue d'un soufflet selon l'invention.
- La figure 2, à une figure analogue, la tige de l'amortisseur étant en position rentrée dans le corps de l'amortisseur.
- La figure 3, à un détail grossi du soufflet tel qu'il vient du moulage.
- La figure 4, à une vue analogue du soufflet en position fonctionnelle.
- La figure 5, à une coupe longitudinale d'une première variante du soufflet de l'invention.
- La figure 6, à une vue analogue d'une autre variante de l'invention.

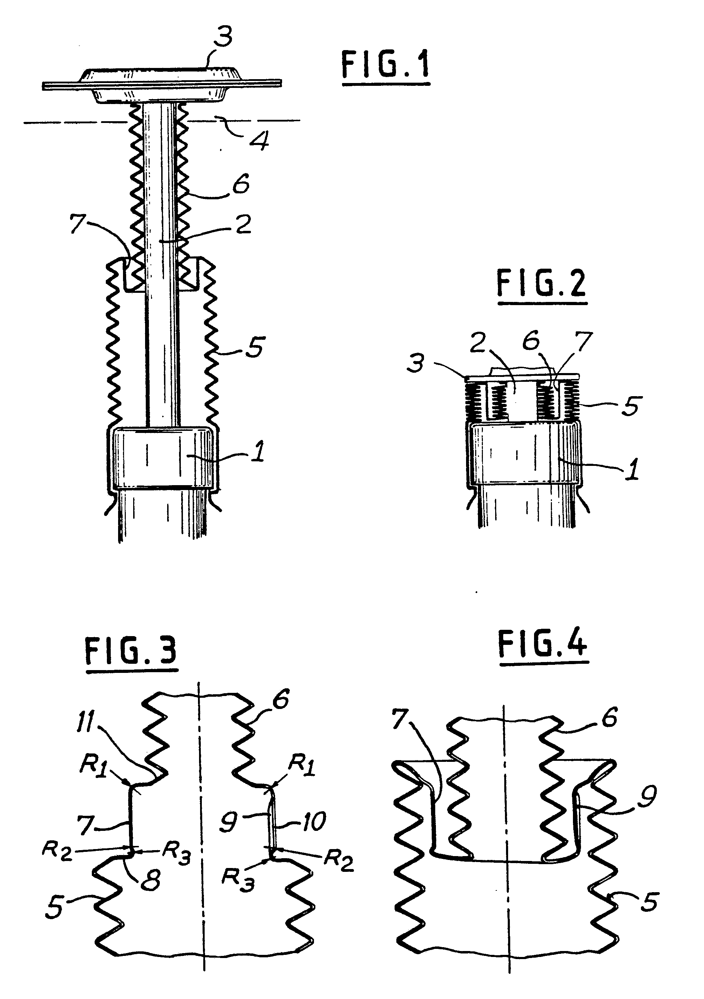

A la figure 1, on voit un détail grossi de la partie supérieure d'un amortisseur 4 plus particulièrement le sommet 1 du corps et sa tige fixée par une attache élastique 3 à la caisse 4.

Le soufflet selon l'invention est constitué de deux éléments plissés coaxiaux 5 et 6 de diamètres différents reliés entre eux par une partie plane intermédiaire ou entretoise 7.

La partie supérieure de l'élément 6 est solidaire de la zone supérieure de la tige 2, tandis que la partie inférieure de l'élément 5 est fixée à la zone supérieure du corps 1 de l'amortisseur par tout moyen connu.

On voit à la figure 2 la position du soufflet dans son ensemble et en situation de butée. On constate que les deux éléments 5 et 6 sont repliés à spires jointives, l'un dans l'autre, la hauteur totale du soufflet n'éxcédant la hauteur de la partie plane intermédiaire 7 calculée en conséquence.

La surface de cette entretoise 7 peut, en variante, être cannelée longitudinalement afin d'augmenter sa rigidité dans ce sens.

Outre l'avantage évident résultant de l'encombrement minimum d'un soufflet permettant par ailleurs une course de débattement relativement importante, on constate également une moins grande sollicitation du matériau en endurance, du fait de la limitation des contraintes dûes à l'écrasement, dans le soufflet de l'invention.

Le détail grossi illustré à la figure 3 se rapporte à l'entretoise 7 et à sa liaison avec les deux éléments 5 et 6 de soufflet coaxiaux.

Ladite entretoise 7 peut être définie comme étant une membrane de révolution apte à être retournée facilement.

Elle est reliée à la spire extérieure de l'élément 5 par une zone 8, mince et normale à l'axe du soufflet, dont la partie inférieure est prolongée par un rayon en creux R3 accentué vers l'intérieur, et revient en inflexion selon un rayon R2 sur le corps central 10 et de l'entretoise.

Cette dernière peut être cylindrique, ou légèrement cônique, le diamètre le plus important étant situé du côté de l'élément 5; des cannelures longitudinales 9 peuvent également être prévues à sa surface.

Une courbure de rayon R1 réunit l'extrémité libre de l'entretoise 7 à la spire 11 de l'extrémité de l'élément 6 constituant le petit soufflet.

La forme du soufflet telle que décrite ci-dessus au regard de la figure 3 est celle qui est obtenue par tout moyen de production usuel tel qu'injection - ou extrusion soufflage - Elle est rendue fonctionnelle par un retournement éventuellement automatisé, conformément à la figure 4, suite à une pression normale aux spires entraînant un roulement de l'entretoise 7.

On notera qu'en position comprimée du soufflet de l'invention, l'entretoise 7 doit se situer à peu près au milieu de l'espace disponible entre les éléments 5 et 6.

La longueur de l'entretoise 7 est sensiblement égale à la somme des épaisseurs des spires dont l'élément le plus long du soufflet sera pourvu.

Le principe qui vient d'être décrit pour deux éléments de soufflet concentriques peut être appliqué à un plus grand nombre de ces éléments.

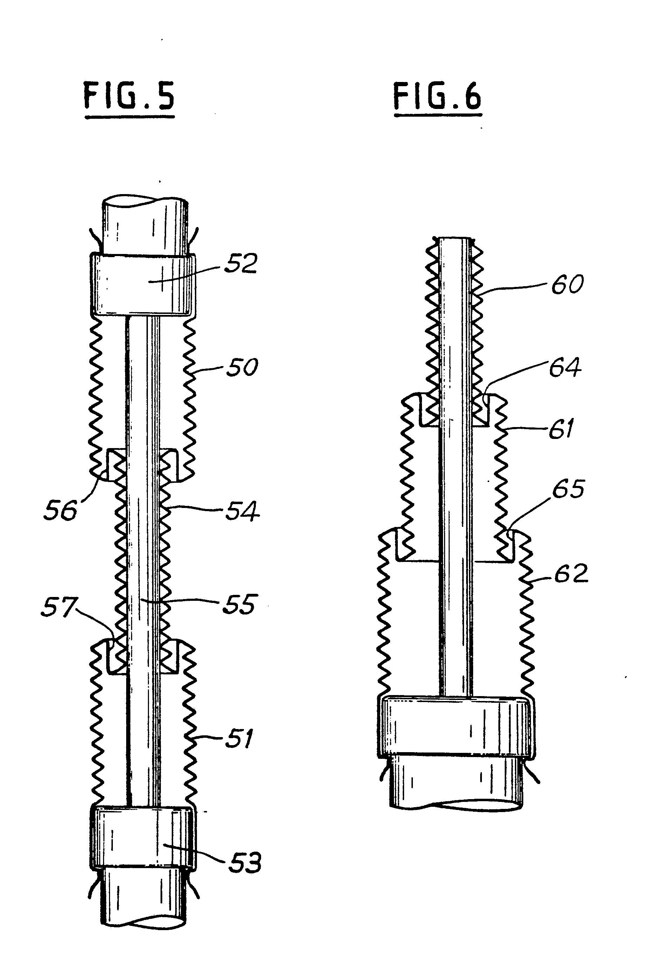

A titre d'exemple, on verra aux figure 5 et 6 deux variantes à trois éléments.

Dans le cas de la figure 5, deux éléments de soufflet de gros diamètres 50 et 51 sont diposés en opposition, solidarisés de façon habituelle par leur extrémité extérieure aux corps 52 et 53, leur extrémité libre est reliée à un soufflet de petit diamètre 54 adapté à celui de la tige 55 par l'intermédiaire d'entretoises 56 et 57.

Dans le cas de la figure 6, le soufflet selon l'invention est constitué de trois éléments plissés, concentriques 60, 61, 62 de diamètre croissant réunis par des entretoises intermédiaires 64 et 65.

Le fonctionnement des deux soufflets selon les variantes ci-dessus de l'invention est analogue à ce qui a été décrit au regard des figures 1 et 2, la hauteur donnée aux différentes entretoises correspond aux mêmes critères que ceux déjà évoqués précédemment.

## Revendications

1. Soufflet de protection pour tige d'amortisseur, notamment pour véhicule automobile, du type constitué d'au moins deux éléments plissés (5, 6), concentriques et de diamètres différents, reliés entre eux par une entretoise intermédiaire (7), caractérisé par le fait que l'entretoise (7) est une membrane de révolution apte à être facilement retournée de sa forme de production à sa position fonctionnelle dans laquelle elle se situe sensiblement au milieu de l'espace disponible entre les éléments plissés (5, 6) qui, en situation d'extension du soufflet sont en relation axiale, ladite entretoise (7) étant solidarisée par l'une de ses extrémités à la spire la plus proche de l'élément (5) de grand diamètre par l'intermédiaire d'une zone (8) mince et normale à l'axe du soufflet, avec laquelle elle forme une courbe en creux (R3) vers l'intérieur poursuivie par une inflexion (R2) inversée qui la relie à un corps central et tubulaire (10) de l'entretoise (7), et dont l'autre extrémité est réunie par une courbe (R1) à la spire extrème (11) de l'élément (6) de petit diamètre dont l'extrémité libre est solidarisée à la tige (2), de telle façon que lorsque les éléments (5, 6) sont repliés à spires jointives, la hauteur totale du soufflet correspond sensiblement à celle de l'entretoise (7).

2. Soufflet de protection selon la revendication 1, caractérisé en ce que l'entretoise (7) est légèrement cônique, le diamètre le plus grand étant situé du côté de l'élément (5) de grand diamètre.

3. Soufflet de protection selon la revendication 1, caractérisé en ce que la surface de l'entretoise (7) est pourvue de cannelures longitudinales (9).

4. Soufflet de protection selon la revendication 1, caractérisé en ce que la longueur de l'entretoise (7) est sensiblement égale à la somme des hauteurs des spires constituant l'élément le plus long.

5. Soufflet de protection selon la revendication 1, caractérisé en ce qu'il est constitué par plusieurs éléments plissés (50, 51, 54) concentriques, dont deux d'entre eux (50, 51), de même diamètre sont séparés par un élément plissé de diamètre inférieur (54) qui leur est raccordé respectivement par deux entretoises (56, 57).

6. Soufflet de protection selon la revendication 1, caractérisé en ce qu'il est constitué par trois éléments plissés concentriques (60, 61, 62) de diamètre croissant réunis respectivement par deux entretoises (64, 65).

## Patentansprüche

1. Schutzbalg für Dämpferkolbenstangen, insbesondere für ein Kraftfahrzeug, der aus wenigstens zwei konzentrisch gefalteten Teilen (5, 6) unterschiedlichen Durchmessers besteht, die miteinander mittels eines Verbindungsstücks (7) verbunden sind, dadurch gekennzeichnet, daß das Verbindungsstück (7) eine kreisförmige Membran ist, die in der Lage ist, leicht von ihrer Herstellungsform in eine Arbeitsform umgedreht zu werden, in der sie im wesentlichen die Mitte des verfügbaren Raums zwischen den gefalteten Teilen (5, 6) einnimmt, die, im ausgezogenen Balgzustand, axial zueinander ausgerichtet sind, wobei das Verbindungsstück (7) mit einem seiner Enden mit der nächstliegenden Windung des Teils (5) größeren Durchmessers über einen dünnen Bereich (8) verbunden ist, der senkrecht zur Balgachse verläuft und mit dem es eine nach innen gestülpte Hohlkehle (R3) bildet, an die sich ein umgedreht geformter Bereich (R2) anschließt, der es mit einem mittleren, rohrförmigen Körper (10) des Verbindungsstücks (7) verbindet und dessen anderes Ende über einen gewölbten Bereich (R1) mit der äußersten Windung (11) des Teils (6) kleineren Durchmessers verbunden ist, dessen freies Ende mit der Stange (2) derart verbunden ist, daß, wenn die Teile (5, 6) zusammengefaltet sind, die Gesamthöhe des Balges im wesentlichen derjenige des Verbindungsstückes (7) entspricht.

2. Schutzbalg nach Anspruch 1, dadurch gekennzeichnet, daß das Verbindungsstück (7) leicht konisch ist, wobei der größere Durchmesser auf der Seite des Teils (5) größeren Durchmessers ist.

3. Schutzbalg nach Anspruch 1, dadurch gekennzeichnet, daß die Oberfläche des Verbindungsstücks (7) mit Längsriffelungen (9) versehen ist.

4. Schutzbalg nach Anspruch 1, dadurch gekennzeichnet, daß die Länge des Verbindungsstücks (7) im wesentlichen gleich der Summe der Höhen der das längere Teil bildenden Windungen ist.

5. Schutzbalg nach Anspruch 1, dadurch gekennzeichnet, daß er aus mehreren gefalteten konzentrischen Teilen (50, 51, 54) besteht, von denen zwei (50, 51) gleichen Durchmessers durch ein gefaltetes Teil geringeren Durchmessers (54) voneinander getrennt sind, das mit ihnen über zwei Verbindungsstücke (56, 57) verbunden ist.

6. Schutzbalg nach Anspruch 1, dadurch gekennzeichnet, daß er aus drei konzentrischen gefalteten Teilen (60, 61, 62) zunehmenden Durchmessers besteht, die durch zwei Verbindungsstücke (64, 65) entsprechend miteinander verbunden sind.

**Claims**

1. A protective bellows for a shock absorber rod in particular for a motor vehicle, of the type comprising at least two concentric corrugated elements (5, 6) of different diameters which are connected together by an intermediate spacer member (7) characterised in that the spacer member (7) is a rotationally symmetrical diaphragm which is capable of being turned over from its production shape to its functional position in which it is disposed substantially at the centre of the available space between the corrugated elements (5, 6) which in the condition of extension of the bellows are in axial relationship, said spacer member (7) being fixed by means of one of its ends to the closest turn of the element (5) of large diameter by way of a thin zone (8) which is normal to the axis of the bellows, with which it forms a curve (R3) which is curved inwardly followed by a reversed inflection portion (R2) which connects it to a central tubular body (10) of the spacer member (7), the other end thereof being connected by a curve (R1) to the end turn (11) of the small-diameter element (6) whose free end is fixed with respect to the rod (2), in such a way that when the elements (5, 6) are closed up with their turns touching, the total height of the bellows substantially corresponds to that of the spacer member (7).

2. A protective bellows according to claim 1 characterised in that the spacer member (7) is slightly conical, the larger diameter being disposed towards the large-diameter element (5).

3. A protective bellows according to claim 1 characterised in that the surface of the spacer member (7) is provided with longitudinal grooves (9).

4. A protective bellows according to claim 1 characterised in that the length of the spacer member (7) is substantially equal to the sum of the heights of the turns forming the longest element.

5. A protective bellows according to claim 1 characterised in that it is formed by a plurality of concentric corrugated elements (50, 51, 54) of which two thereof (50, 51), of the same diameter, are separated by a corrugated element (54) of smaller diameter, which is connected thereto by two spacer members (56 - 57) respectively.

6. A protective bellows according to claim 1 characterised in that it is formed by three concentric corrugated elements (60, 61, 62) of increasing diameters which are respectively connected by means of two spacer members (64, 65).

# FIG.1

# FIG.2

# FIG.3

# FIG.4

1

# FIG.5

# FIG.6